# DEMANDE DE BREVET EUROPEEN

(11) **EP 4 793 175 A1**
(43) Date de publication de la demande: **19.08.2026**
(21) Numéro de dépôt: 26154511.5
(22) Date de dépôt: 27.01.2026
(51) Int. Cl.: B64D 37/00, B64D 37/32

(54) **VÉHICULE COMPRENANT AU MOINS UN ÉVENT PASSIF POUR L'ÉVACUATION D'UN GAZ ASCENDANT**

(30) Priorité: 12.02.2025 FR 2501440
(71) Demandeur: AIRBUS OPERATIONS (S.A.S.), 31060 Toulouse (FR)
(72) Inventeur: DAVELOOSE, Ludovic, Toulouse (FR); CHAPONET, Fabien, Toulouse (FR)
(74) Mandataire: Airbus-OPS SAS

(57) **Abrégé**

L'invention a pour objet un véhicule comportant :
- au moins une paroi aérodynamique (20) qui présente une surface aérodynamique (S20) contre laquelle peut s'écouler un flux d'air (22) selon une direction d'écoulement (D22) de l'avant vers l'arrière,
- au moins une zone d'accumulation (ZA) au niveau de laquelle peut s'accumuler un gaz ascendant,
- au moins un évent (26) qui comporte :
∘ au moins un conduit (28) reliant la zone d'accumulation (ZA) et la surface aérodynamique (S20),
∘ au moins un déflecteur (30) relié à la paroi aérodynamique (20), positionné au-dessus du conduit (28) et configuré pour dévier vers l'arrière un flux de gaz sortant du conduit (28).

Cet évent permet d'éviter l'accumulation du gaz ascendant dans le véhicule en le canalisant vers l'extérieur.

## Description

La présente demande se rapporte à un véhicule comprenant au moins un évent passif pour l'évacuation d'un gaz ascendant comme de l'hydrogène.

Selon un mode de réalisation connu, un aéronef fonctionnant à l'hydrogène comprend au moins un réservoir d'hydrogène, des canalisations d'hydrogène reliant le réservoir d'hydrogène et des turboréacteurs à hydrogène ou des piles à combustible alimentant des moteurs électriques. Tous ces équipements sont conçus pour limiter les risques de fuites d'hydrogène. Cependant, tout risque de fuite ne peut être écarté et de l'hydrogène peut s'accumuler dans une zone de l'aéronef.

On connaît, notamment selon la demande de brevet US 9 281 533 B2, un système de ventilation pour un véhicule, conçu pour évacuer un gaz qui s'accumule dans une zone spécifique. Le dispositif utilise un conduit pour amener le gaz jusqu'à la surface extérieure du véhicule, où un déflecteur est installé pour forcer le flux de gaz sortant à se diriger vers l'arrière. Cependant, cette solution ne répond pas de manière satisfaisante au problème de l'évacuation sécurisée d'un gaz ascendant, comme l'hydrogène, qui pourrait s'accumuler sous une paroi aérodynamique en cas de fuite.

### EXPOSE DE L'INVENTION

La présente invention vise à renforcer la sécurité de tout véhicule fonctionnant à l'hydrogène (ou à tout autre gaz ascendant) en limitant les risques d'accumulation d'un tel gaz dans le véhicule.

A cet effet, l'invention présente un véhicule comportant au moins une paroi aérodynamique qui présente une surface aérodynamique, contre laquelle peut s'écouler un flux d'air selon une direction d'écoulement de l'avant vers l'arrière, ainsi qu'au moins une zone d'accumulation au niveau de laquelle peut s'accumuler un gaz ascendant conforme à la revendication 1. Il ressort de cette revendication que la constitution du déflecteur en une pièce unique comprenant une plaque et une paroi de déviation permet de canaliser efficacement le gaz évacué tout en assurant une structure robuste et simple à fabriquer, limitant ainsi les perturbations aérodynamiques.

### DESCRIPTION DETAILLEE

D'autres caractéristiques et avantages ressortiront de la description de l'invention qui va suivre, description donnée à titre d'exemple uniquement, en regard des dessins annexés parmi lesquels :
La figure 1 est une vue latérale d'un aéronef.
La figure 2 est une coupe longitudinale schématique d'une partie d'une paroi aérodynamique équipée d'un évent passif illustrant un mode de réalisation de l'invention.
La figure 3 est une coupe longitudinale d'une partie d'une paroi aérodynamique équipée d'un évent passif illustrant un autre mode de réalisation de l'invention.
La figure 4 est une vue en perspective d'un déflecteur de l'évent visible sur la figure 3.
La figure 5 est une vue de dessus du déflecteur visible sur la figure 4.

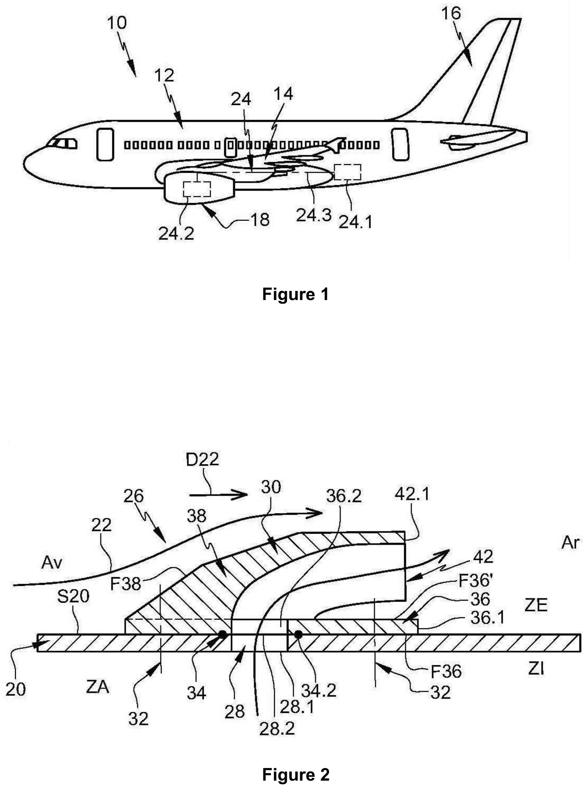

Selon un mode de réalisation visible sur la figure 1, un aéronef 10 comprend un fuselage 12, des ailes 14 situées de part et d'autre du fuselage 12, un empennage 16 situé à l'arrière du fuselage 12 ainsi que des ensembles de propulsion 18 positionnés sous les ailes 14 et reliés à ces dernières.

Tous ces éléments comprennent au moins une paroi aérodynamique 20 qui présente une surface aérodynamique S20 contre laquelle s'écoule un flux d'air 22 selon une direction d'écoulement D22 de l'avant Av vers l'arrière Ar.

La paroi aérodynamique 20 sépare une zone extérieure ZE en contact avec la surface aérodynamique S20 et une zone intérieure ZI.

Pour la suite de la description, une direction longitudinale est parallèle à la direction d'écoulement D22.

Un plan longitudinal est parallèle à la direction d'écoulement D22 et à une direction normale perpendiculaire à la surface aérodynamique S20.

Selon une configuration, l'aéronef 10 comprend au moins un circuit à l'hydrogène 24 qui comprend au moins un réservoir d'hydrogène 24.1, au moins un équipement fonctionnant à l'hydrogène 24.2, comme un turboréacteur ou une pile à combustible par exemple, ainsi qu'au moins une canalisation d'hydrogène 24.3 reliant le réservoir d'hydrogène 24.1 et l'équipement fonctionnant à l'hydrogène 24.2.

En cas de fuite, l'hydrogène peut s'accumuler dans une zone d'accumulation ZA située par exemple sous la paroi aérodynamique 20.

Bien entendu, l'invention n'est pas limitée à cette application. Ainsi, l'invention peut être appliquée à tout véhicule comportant :
a. au moins une paroi aérodynamique 20 qui présente une surface aérodynamique S20, en contact avec une zone extérieure ZE, contre laquelle peut s'écouler un flux d'air 22 selon une direction d'écoulement D22 de l'avant vers l'arrière,
b. au moins une zone d'accumulation ZA au niveau de laquelle peut s'accumuler un gaz ascendant.

La zone d'accumulation ZA est délimitée en partie supérieure par une paroi supérieure 25 qui peut être la paroi aérodynamique 20 ou une paroi distincte de la paroi aérodynamique 20. Lorsque la paroi supérieure 25 et la paroi aérodynamique 20 forment une unique et même paroi, la zone d'accumulation ZA est incluse dans la zone intérieure ZI.

La paroi supérieure 25 est configurée pour permettre l'accumulation du gaz ascendant.

Elle peut être exclusivement prévue pour cette fonction d'accumulation ou avoir d'autres fonctions comme former une barrière entre des zones intérieure et extérieure ZE, ZI en tant que une paroi aérodynamique.

Selon une application, le gaz ascendant est de l'hydrogène. Toutefois, d'autres gaz peuvent être envisagés dans la mesure où ils sont plus légers que l'air.

L'aéronef 10 comprend au moins un évent 26 de type passif, configuré pour évacuer le gaz ascendant vers la zone extérieure ZE, comportant :
a. au moins un conduit 28 qui s'étend entre une première extrémité 28.1 débouchant dans la zone d'accumulation ZA et une deuxième extrémité 28.2 débouchant au niveau de la surface aérodynamique S20 dans la zone extérieure ZE,
b. au moins un déflecteur 30 positionné au-dessus du conduit 28 et configuré pour dévier, selon la direction longitudinale et vers l'arrière, un flux de gaz sortant du conduit 28 via la deuxième extrémité 28.2,
c. ainsi qu'au moins un système de liaison 32 reliant le déflecteur 30 et la paroi aérodynamique 20.

Selon un mode de réalisation, lorsque la paroi supérieure 25 et la paroi aérodynamique 20 forment une même et unique paroi, le conduit 28 est un trou cylindrique traversant la paroi aérodynamique 20.

Selon une configuration, le système de liaison 32 comprend des éléments de fixation 32.1 comme des boulons ou des rivets par exemple.

Selon un agencement, le système de liaison comprend quatre éléments de fixation 32.1 et chaque élément de fixation 32.1 comprend une tête fraisée affleurant à la surface du déflecteur 30.

En variante ou en complément, le système de liaison 32 comprend un film de colle intercalé entre le déflecteur 30 et la paroi aérodynamique 20.

Bien entendu, l'invention n'est pas limitée à ces solutions pour le système de liaison 32.

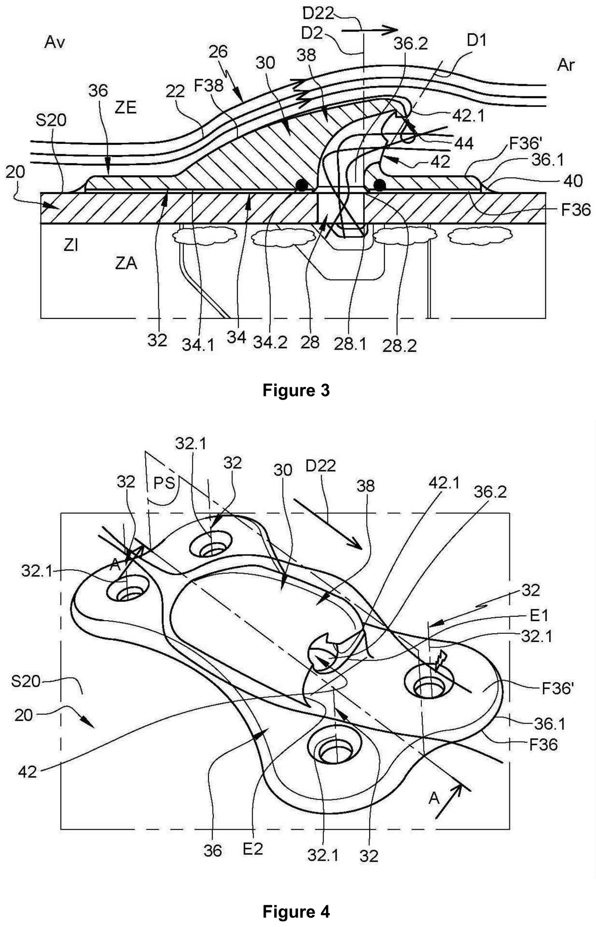

Selon un mode de réalisation visible sur la figure 3, l'évent 26 comprend un système d'étanchéité 34 intercalé entre le déflecteur 30 et la paroi aérodynamique 20 et positionné autour de la deuxième extrémité 28.2 du conduit 28. Selon une configuration, le système d'étanchéité 34 comprend un film, en polytétrafluoroéthylène 34.1 ou en gel de polyuréthane, intercalé entre le déflecteur 30 et la paroi aérodynamique 20, autour de la deuxième extrémité 28.2 du conduit 28.

En variante ou en complément, le système d'étanchéité 34 comprend un joint torique 34.2 intercalé entre le déflecteur 30 et la paroi aérodynamique 20, autour de la deuxième extrémité 28.2 du conduit 28.

Bien entendu, l'invention n'est pas limitée à ces solutions pour le système d'étanchéité 34.

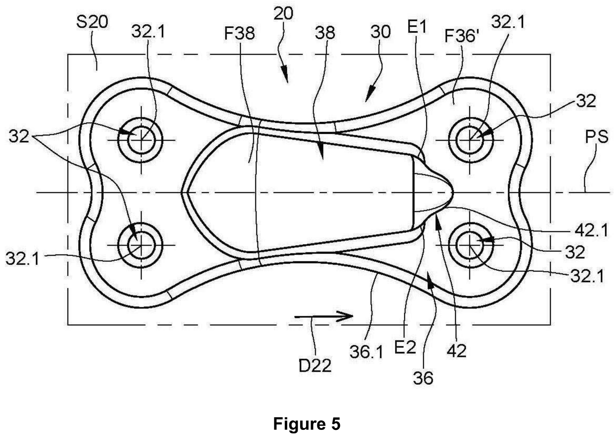

Selon un mode de réalisation visible sur les figures 3 à 5, le déflecteur 30 est symétrique par rapport à un plan de symétrie PS parallèle à la direction longitudinale ou d'écoulement D22, de préférence passant par l'axe de la deuxième extrémité 28.2 du conduit 28.

Le déflecteur 30 peut être réalisé en matériau composite en utilisant un procédé d'impression tridimensionnelle.

Bien entendu, l'invention n'est pas limitée à ce procédé ou à ce matériau.

Selon une configuration, le déflecteur 30 comprend au moins une plaque 36 ainsi qu'au moins une paroi de déviation 38 reliée à la plaque 36 et formant avec cette dernière une unique et même pièce.

Selon un agencement, la plaque 36 présente une face inférieure F36 orientée vers la paroi aérodynamique 20, une face supérieure F36' opposée à la face inférieure F36 au niveau de laquelle est située la paroi de déviation 38 ainsi qu'un chant périphérique 36.1 reliant les faces inférieure et supérieure F36, F36'.

La plaque 36 comprend un orifice 36.2 reliant les faces inférieure et supérieure F36, F36' et prolongeant le conduit 28.

Selon un agencement, la plaque 36 est sensiblement plane. Selon cet agencement, si la paroi aérodynamique 20 n'est pas plane, l'évent 26 comprend au moins une interface prévue entre la plaque 36 du déflecteur 30 et la paroi aérodynamique 20 afin de combler l'espace entre la plaque 36 et la paroi aérodynamique 20.

Selon un autre agencement, lorsque la paroi aérodynamique 20 est courbe, la plaque 36 est conformée comme la paroi aérodynamique 20 afin que la face inférieure F36 de la plaque 36 épouse la courbure de la surface aérodynamique S20.

Le système de liaison 32 est configuré pour lier la plaque 36 du déflecteur 30 et la paroi aérodynamique 20.

Le déflecteur 30 est configuré pour limiter les perturbations aérodynamiques sur le flux d'air 22. Ainsi, le chant périphérie 36.1 est le plus réduit possible pour réduire les perturbations aérodynamiques générées par la plaque 36 du déflecteur 30.

Selon un mode de réalisation visible sur la figure 3, l'évent 26 comprend un cordon périphérique 40, reliant la paroi aérodynamique 20 et le chant périphérique 36.1 de la plaque 36, configuré pour réduire les perturbations aérodynamiques générées par la plaque 36 du déflecteur 30.

Selon un agencement, le chant périphérique 36.1 décrit approximativement un rectangle avec des angles arrondis.

Bien entendu, l'invention n'est pas limitée à cette géométrie pour la plaque 36.

Selon une configuration visible sur les figures 3 à 5, la paroi de déviation 38 comprend au moins un bord de fuite 42 qui présente un tronçon arrière 42.1 espacé de la plaque 36 et décalé vers l'arrière par rapport à la deuxième extrémité 28.2 du conduit 28. Selon un agencement, le bord de fuite 42 est décalé vers l'arrière par rapport à la deuxième extrémité 28.2 du conduit 28 de manière à ce qu'une première droite D1 passant par ledit tronçon arrière 42.1 et un point arrière de la deuxième extrémité 28.2 (correspondant au point de la deuxième extrémité 28.2 situé le plus à l'arrière) forme avec une deuxième droite D2 passant par le point arrière et perpendiculaire à la surface aérodynamique S20 un angle compris entre 15 et 45°.

Selon un agencement, le bord de fuite 42 est symétrique par rapport au plan de symétrie PS.

Le bord de fuite 42 décrit une forme ovoïde. En variante, le bord de fuite 42 s'étend entre des première et deuxième extrémités situées au niveau de la plaque 36 et décrit une forme approximativement en U inversé.

Selon un mode de réalisation, le tronçon arrière 42.1 du bord de fuite 42 comprend un brise-goutte 44 pour limiter les risques d'un écoulement par capillarité d'un liquide du tronçon arrière 42.1 du bord de fuite 42 en direction de la deuxième extrémité 28.2 du conduit 28.

Selon une configuration, la paroi de déviation 38 présente une forme de parapluie et comprend une surface extérieure F38 configurée pour limiter les perturbations aérodynamiques.

En complément, l'évent 26 peut comprendre au moins un raccord configuré pour raccorder, lorsque le véhicule est à l'arrêt, un conduit d'un système de ventilation afin de ventiler la zone d'accumulation ZA et/ou au moins un capteur configuré pour mesurer la concentration de gaz ascendant dans la zone d'accumulation ZA.

## Revendications

1. Véhicule comportant au moins une paroi aérodynamique (20) qui présente une surface aérodynamique (S20), contre laquelle peut s'écouler un flux d'air (22) selon une direction d'écoulement (D22) de l'avant vers l'arrière, ainsi qu'au moins une zone d'accumulation (ZA) au niveau de laquelle peut s'accumuler un gaz ascendant ; le véhicule comprenant au moins un évent (26) comportant :
- au moins un conduit (28) qui s'étend entre une première extrémité (28.1) débouchant dans la zone d'accumulation (ZA) et une deuxième extrémité (28.2) débouchant au niveau de la surface aérodynamique (S20),
- au moins un déflecteur (30) positionné au-dessus du conduit (28) et configuré pour dévier vers l'arrière un flux de gaz sortant du conduit (28) via sa deuxième extrémité (28.2),
- ainsi qu'au moins un système de liaison (32) reliant le déflecteur (30) et la paroi aérodynamique (20),
**caractérisé en ce que** le déflecteur (30) comprend au moins une plaque (36) ainsi qu'au moins une paroi de déviation (38) reliée à la plaque (36) et formant avec cette dernière une unique et même pièce.

2. Véhicule selon la revendication 1, **caractérisé en ce que** la zone d'accumulation (ZA) est délimitée en partie supérieure par la paroi aérodynamique (20) et **en ce que** le conduit (28) est un trou traversant la paroi aérodynamique (20).

3. Véhicule selon l'une des revendications précédentes, **caractérisé en ce que** le déflecteur (30) est symétrique par rapport à un plan de symétrie (PS) parallèle à la direction d'écoulement (D22).

4. Véhicule selon la revendication précédente, **caractérisé en ce que** la paroi de déviation (38) comprend au moins un bord de fuite (42) qui présente un tronçon arrière (42.1) espacé de la plaque (36) et décalé vers l'arrière par rapport à la deuxième extrémité (28.2) du conduit (28).

5. Véhicule selon les revendications 3 et 4, **caractérisé en ce que** le bord de fuite (42) est symétrique par rapport au plan de symétrie (PS).

6. Véhicule selon l'une des revendications 4 à 5, **caractérisé en ce que** le bord de fuite (42) est décalé vers l'arrière par rapport à la deuxième extrémité (28.2) du conduit (28) de manière à ce qu'une première droite (D1) passant par ledit tronçon (42.1) et un point arrière de la deuxième extrémité (28.2) forme un angle compris entre 15 et 45° avec une deuxième droite (D2) passant par le point arrière et perpendiculaire à la surface aérodynamique (S20).

7. Véhicule selon l'une des revendications 4 à 6, **caractérisé en ce que** le tronçon arrière (42.1) du bord de fuite (42) comprend un brise-goutte (44).

8. Véhicule selon l'une des revendications précédentes, **caractérisé en ce que** l'évent (26) comprend un système d'étanchéité (34) intercalé entre le déflecteur (30) et la paroi aérodynamique (20) et positionné autour de la deuxième extrémité (28.2) du conduit (28).

9. Véhicule selon la revendication précédente, **caractérisé en ce que** le système d'étanchéité (34) comprend un film (34.1) et/ou un joint torique (34.2) intercalé entre le déflecteur (30) et la paroi aérodynamique (20), autour de la deuxième extrémité (28.2) du conduit (28).

10. Véhicule selon l'une des revendications précédentes, **caractérisé en ce que** le déflecteur (30) est configuré pour limiter les perturbations aérodynamiques sur le flux d'air (22).
